# EUROPÄISCHE PATENTSCHRIFT

(11) **EP 2 709 262 B1**
(45) Veröffentlichungstag und Bekanntmachung des Hinweises auf die Patenterteilung: **25.08.2021**
(21) Anmeldenummer: 13184094.4
(22) Anmeldetag: 12.09.2013
(51) Int. Cl.: H02P 3/00, G05D 3/10, F16H 25/20

(54) **Elektromechanischer Aktuator**
Electromechanical actuator
Actionneur électromécanique

(30) Priorität: 14.09.2012 DE 102012216366
(43) Veröffentlichungstag der Anmeldung: 19.03.2014
(73) Patentinhaber: Ewellix AB, 41552 Göteborg (SE)
(72) Erfinder: Panzer, Hans-Peter, 79540 Lörrach (DE); Stehli, Christian, 4052 Basel (CH); Voegelin, Martin, 4434 Hölstein (CH)
(74) Vertreter: Heyerhoff Geiger & Partner Patentanwälte PartGmbB

(56) Entgegenhaltungen:
- WO-A1-2007/131509
- WO-A1-2011/042472
- US-A1- 2006 036 402
- US-A1- 2008 012 522
- US-A1- 2009 306 830

## Beschreibung

Die Erfindung betrifft einen elektromechanischer Aktuator, umfassend ein Gehäuse, einen im Gehäuse angeordneten Antriebsmotor und ein vom Antriebsmotor angetriebenes Umwandlungselement, wobei das Umwandlungselement ein bewegliches Verfahrmittel aufweist, das in eine translatorische Verfahrrichtung bewegt werden kann, wobei im Aktuator Wegbegrenzungsmittel angeordnet sind, die den Antriebsmotor abschalten, wenn das Verfahrmittel einen vorgegebenen maximalen Verfahrweg erreicht hat, wobei die Wegbegrenzungsmittel als berührungslose elektronische Schaltmittel ausgebildet sind und wobei die Wegbegrenzungsmittel mindestens einen Hall-Sensor umfassen, der mit einer Steuerung in Verbindung steht.

Einen gattungsgemäßen Aktuator offenbart die WO 2011/042472 A1**.** Eine ähnliche Lösung beschreibt die US 2006/036402 A1**,** bei der für die Anwendung in einem Flugzeug eine Anzahl an Systemparametern überwacht und gespeichert wird. Den Einsatz eines Hall-Sensors bei einem Linearaktuator beschreibt die WO 2007/131509 A1**.** Weitere Lösungen zeigen die US 2008/012522 A1 und die WO 2011/042472 A1**.**

Aktuatoren dieser Art werden in verschiedenen Anwendungen eingesetzt. Mit ihnen kann ein Maschinenteil in eine translatorische Verschieberichtung hin und her bewegt werden, wozu besagtes Maschinenteil mit dem beweglichen Verfahrmittel verbunden wird. Auf diese Art und Weise kann das Maschinenteil zwischen zwei definierten Endpositionen gesteuert bewegt werden. Damit die gewünschten bzw. benötigten Endpositionen der translatorischen Bewegung eingehalten werden, ist es bekannt, den Aktuator mit Endschaltern auszustatten, die die Bewegung beim Erreichen der Endposition stoppen.

Bei den Endschaltern handelt es sich um elektro-mechanische Komponenten, die beispielsweise am beweglichen Verfahrmittel angeordnet sind. Ist der gewünschte maximale Verfahrweg erreicht, ist an dieser Stelle ein elektro-mechanisches Element platziert, das den Endschalter betätigt, sobald er die entsprechende Maximalposition erreicht hat. Dann erfolgt eine Unterbrechung der Stromzufuhr zum Antriebsmotor, so dass die Bewegung des Verfahrmittels zum Stillstand kommt.

Es kann auch vorgesehen werden, dass in den gewünschten Endpositionen der Verfahrbewegung des Verfahrmittels mechanische Anschläge montiert werden. Erreicht das Verfahrmittel den Anschlag, steigt der Strom des Antriebsmotors stark an. Dies kann von einer Steuerung beobachtet werden, die daraufhin infolge "Überstrom" den Motor abschaltet.

Die bekannten Lösungen haben nachteilig zur Folge, dass jeweils spezielle Bauteile benötigt werden, um eine definierte Wegbegrenzung der Verfahrmittel-Fahrbewegung einstellen zu können. Ferner ist ein relativ hoher mechanischer Verschleiß der Wegbegrenzungsmittel gegeben, so dass die Lebensdauer des Aktuators entsprechend begrenzt ist.

Auch die Überwachung eines gattungsgemäßen Aktuators zur Feststellung seines Wartungszustands ist mit relativ großem Aufwand verbunden. Es sind Geräte bekannt (z. B. "Alimo" - "Actuator Lifetime Monitoring" der AB SKF), die an einen Aktuator angeschlossen werden können, um Daten über die Betriebszeit und Lastzyklen abzurufen.

Der Erfindung liegt die **Aufgabe** e zugrunde, einen elektromechanischen Aktuator der eingangs genannten Art so fortzubilden, dass es in einfacherer Weise möglich sein, den Aktuator hinsichtlich seines Wartungszustands zu überwachen.

Die **Lösung** dieser Aufgabe durch die Erfindung ist dadurch gekennzeichnet, dass die Steuerung ausgebildet ist, die Anzahl der Fahrzyklen des Verfahrmittels zu zählen oder die Anzahl der Ereignisse zu zählen, in denen der Strom des Antriebsmotors einen vorgegebenen Maximalwert überschreitet, wobei die Steuerung weiter ein Speicherelement aufweist, in dem die Anzahl der gezählten Fahrzyklen des Verfahrmittels oder die Anzahl der Ereignisse gespeichert werden können, in denen der Strom des Antriebsmotors den vorgegebenen Maximalwert überschreitet.

Man könnte insofern von den Wegbegrenzungsmitteln als von einer Art "virtueller" Schaltmittel sprechen.

Die Antriebswelle des Antriebsmotors kann ein Ringelement aufweisen, wobei das Ringelement mindestens einen magnetisierten Abschnitt oder mindestens einen Magneten aufweist und wobei der Hall-Sensor in der Nähe des mindestens einen magnetisierten Abschnitts oder des mindestens einen Magneten ortsfest angeordnet ist. Die Steuerung kann dann ausgebildet sein, die Anzahl der vom Hall-Sensor gelieferten Impulse zu zählen und bei einer Verfahrbewegung des Verfahrmittels nach einer vorgegebenen Anzahl Impulsen seit Anlauf des Verfahrmittels den Antriebsmotor abzuschalten.

Das Umwandlungselement ist bevorzugt als Spindel-Mutter-System ausgebildet. Generell und bevorzugt wandelt es eine Rotationsbewegung in eine Translationsbewegung um.

Das Gehäuse des Aktuators kann eine Grundplatte und eine Deckplatte umfassen, die über ein säulenartiges Verbindungselement verbunden sind. Das säulenartige Verbindungselement ist bevorzugt ein Gehäuse des Umwandlungselements.

Das Verfahrmittel umfasst insbesondere das Gehäuse, die Deckplatte, das Umwandlungselement und das Verbindungselement. Das Wegbegrenzungsmittel umfasst die Steuerung sowie die Sensorik, bevorzugt ausgebildet als Hall-Sensor.

Vorgesehen ist also die Integration eines elektronischen Wegbegrenzungssystems für die translatorische Bewegung des Verfahrmittels des elektromechanischen Aktuators. Die Steuerung und die Sensorik, also die Wegbegrenzungsmittel, sind in den Aktuator integriert.

Hiermit können teure und verschleißanfällige mechanische Endschalter vermieden werden. Ferner kann auf spezielle Bauteile verzichtet werden, die bei vorbekannten Lösungen benötigt werden, um einen speziellen Verfahrweg einstellen zu können. Die Kosten des Aktuators bei seiner Herstellung und bei seiner Montage können so vermindert werden. Weiterhin kann eine höhere Zuverlässigkeit des Systems erreicht werden, da auf verschleißanfällige Bauteile verzichtet werden kann. Die Wartungsintervalle können gegebenenfalls entsprechend verlängert werden.

Das vorgeschlagene Wegbegrenzungssystem benötigt keine Verfahrwegs- bzw. längenabhängigen Komponenten.

Mit dem vorgeschlagenen Aktuator ist es in einfacher und vorteilhafter Weise möglich, die Betriebszeit, die Verfahrzyklen, den Antriebsstrom und die Anzahl der Ereignisse, in denen der Strom des Antriebsmotors einen vorgegebenen Maximalwert überschreitet, zu erfassen und zu protokollieren. Dies schafft die Möglichkeit, in einfacher Weise Aussagen abzuleiten, wie es um den Wartungszustand des Aktuators bestellt ist.

Bezüglich der besonders bevorzugten Lösung, dass die Anzahl der Ereignisse gezählt und gespeichert wird, in denen der Strom des Antriebsmotors einen vorgegebenen Maximalwert überschreitet (der in der Steuerung bzw. einem entsprechenden Speicherelement gespeichert ist), sei folgendes angemerkt: Es hat sich hierbei bewährt, dass der aktuelle Strom des Antriebsmotors gemessen und mit einem hinterlegten, d. h. gespeicherten Wert verglichen wird, der als zulässiger Maximalwert für den Motorstrom gilt. Erfasst wird dabei, wann bzw. wie oft binnen eines vorgegebenen Zeitintervals bzw. Betriebszeitraums der zulässige Maximalwert überschritten wird. Gespeichert wird jeweils, wenn eine Überschreitung des gespeicherten Maximalwerts durch den aktuellen Motorstrom stattfindet. Der vorgegebene maximal zulässige Wert für den Motorstrom wird in Abhängigkeit der aktuellen Funktion des Aktuators festgelegt bzw. gewählt, wobei ebenfalls die Auf- und Abbewegung des Aktuators sowie das Anfahr- und Abbremsverhalten sowie der Sicherheitsstatus mit eingehen kann.

Es hat sich überraschenderweise herausgestellt, dass die ermittelte Anzahl der Überschreitungen des Maximalstroms einen guten Indikator für den (Wartungs-)Zustand des Systems bzw. für die Notwendigkeit einer Wartung liefert.

Eine weitere Möglichkeit besteht darin, ein gezieltes Anfahren und Abbremsen des Verfahrmittels zu bewerkstelligen (Beschleunigungs- und Verzögerungsrampe), um ein weiches Anfahren und Abbremsen zu ermöglichen. Damit kann auch erreicht werden, dass die Stromstärke weniger Spitzen aufweist, die bei häufigem Auftreten schädigend sein können.

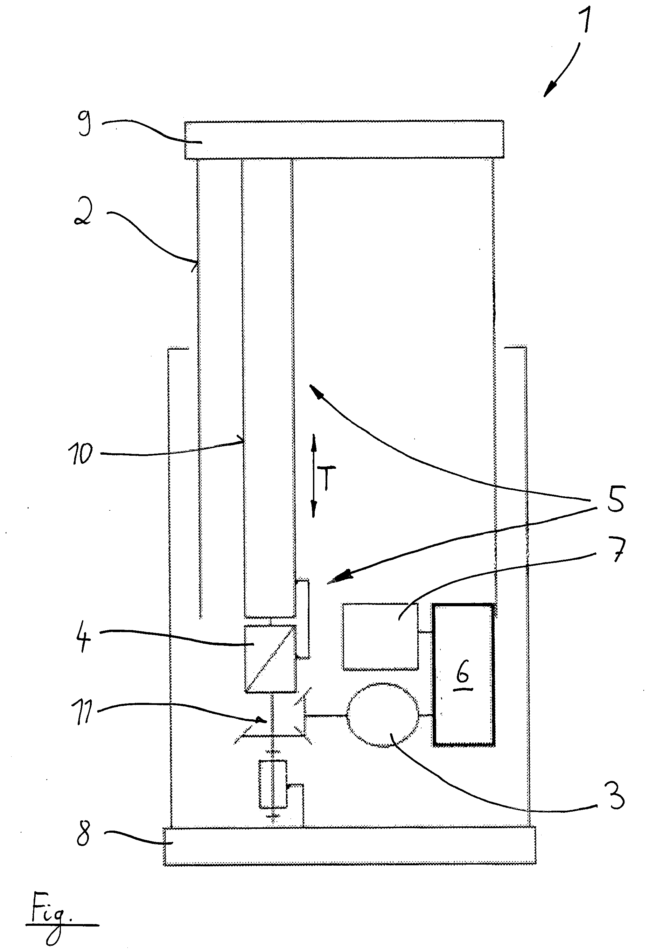

In der Zeichnung ist ein Ausführungsbeispiel der Erfindung dargestellt. Die einzige Figur zeigt schematisch die Seitenansicht eines elektromechanischen Aktuators.

In der Figur ist ein Aktuator 1 skizziert, der ein Gehäuse 2 umfasst (nur sehr schematisch dargestellt). Das Gehäuse 2 besteht im Wesentlichen aus zwei Platten, nämlich einer Grundplatte 8 und einer Deckplatte 9, die über ein säulenartiges Verbindungselement 10 miteinander verbunden sind. Besagtes Verbindungselement ist vorliegend eine Einhausung eines Umwandlungselements 4 in Form eines Spindel-Mutter-Systems. Dieses System umfasst ein Verfahrmittel 5, das beim Drehen der Spindel eine translatorische Bewegung in die Verfahrrichtung T ausführt. Am Verfahrmittel 5 kann, was nicht dargestellt ist, ein Maschinenteil befestigt werden, das beim Antrieb der Spindel des Spindel-Mutter-Systems entsprechend in die translatorische Verfahrrichtung T bewegt wird.

Zum Antrieb des Umwandlungselements 4 ist ein Antriebsmotor 3 vorgesehen, der vorliegend über ein Kegelradgetriebe 11 die Spindel des Spindel-Mutter-Systems antreibt.

Damit das Verfahrmittel 5 in beiden Richtungen des Verfahrweges nur einen maximalen Weg zurücklegt, sind Wegbegrenzungsmittel 6, 7 vorhanden. Diese umfassen eine Steuerung 6 sowie eine Sensorik 7 (mit mindestens einem Hall-Sensor).

Dabei ist - was nicht näher dargestellt ist - vorgesehen, dass auf der rotierenden Antriebswelle des Antriebsmotors 3 ein Ringelement drehfest angeordnet ist, das an einer Umfangsposition einen Magneten (oder an zwei diametral gegenüberliegenden Umfangspositionen zwei Magnete) aufweist. Ortsfest neben besagtem Ringelement ist ein Hall-Sensor angeordnet. Rotiert die Antriebswelle des Antriebsmotors 3, wird im Hall-Sensor beim Passieren des oder der Magneten über den Hall-Effekt ein Strom erzeugt, der von der Steuerung 6 erfasst werden kann.

Durch Zählen der vom Hall-Sensor kommenden Impulse kann die Steuerung präzise auf den Verfahrweg des Verfahrmittels 5 schließen, da über den Drehwinkel der Antriebswelle des Antriebsmotors 3, das Kegelradgetriebe 11 und das Spindel-Mutter-System 4 die genaue Verschiebung des Verfahrmittels 5 in Verfahrrichtung T festliegt.

Die Steuerung 6 ist daher in der Lage, nach einer gespeicherten Anzahl von (Hall)Impulsen, d. h. wenn das Verfahrmittel 5 seine gewünschte maximale Verfahrposition erreicht hat, den Antriebsmotor 3 abzuschalten. Demgemäß liegt ein Wegbegrenzungsmittel 6, 7 vor, das auf rein elektronischer Basis beruht.

Die Wegbegrenzungsmittel 6, 7 benötigen also keine mechanischen, verschleißanfälligen Teile.

Nach der Montage des Aktuators werden die Daten in die Steuerung eingespielt, die für den Betrieb nötig sind, insbesondere die gewünschten maximalen Verfahrwege. Die Veränderung der Verfahrwege erfordert also keine mechanische Verstellung, sondern nur eine Änderung der Daten in der Steuerung 6.

Wie bereits erwähnt, kann von der Steuerung auch ein sanfter Anlauf und Auslauf des Verfahrmittels sichergestellt werden, was wiederum rein programmtechnisch ohne mechanische Komponenten erfolgt. Eine schlagartige Belastung des Aktuators und der angebrachten Bauteile kann so vermieden werden.

### Bezugszeichenliste

- 1: Aktuator
- 2: Gehäuse
- 3: Antriebsmotor
- 4: Umwandlungselement (Getriebeelement)
- 5: Verfahrmittel
- 6, 7: Wegbegrenzungsmittel
- 6: Steuerung
- 7: Sensorik
- 8: Grundplatte
- 9: Deckplatte
- 10: Verbindungselement
- 11: Kegelradgetriebe

- T: translatorische Verfahrrichtung

## Patentansprüche

1. Elektromechanischer Aktuator (1), umfassend ein Gehäuse (2), einen im oder am Gehäuse angeordneten Antriebsmotor (3) und ein vom Antriebsmotor (3) angetriebenes Umwandlungselement (4), wobei das Umwandlungselement (4) ein bewegliches Verfahrmittel (5) aufweist, das in eine translatorische Verfahrrichtung (T) bewegt werden kann, wobei im Aktuator (1) Wegbegrenzungsmittel (6, 7) angeordnet sind,
**dadurch gekennzeichnet, dass**
die Wegbegrenzungsmittel (6, 7) den Antriebsmotor (3) abschalten, wenn das Verfahrmittel (5) einen vorgegebenen maximalen Verfahrweg erreicht hat, wobei die Wegbegrenzungsmittel (6, 7) als berührungslose elektronische Schaltmittel ausgebildet sind und wobei die Wegbegrenzungsmittel (6, 7) mindestens einen Hall-Sensor umfassen, der mit einer Steuerung (6) in Verbindung steht, wobei die Steuerung (6) ausgebildet ist, die Anzahl der Fahrzyklen des Verfahrmittels (5) zu zählen oder die Anzahl der Ereignisse zu zählen, in denen der Strom des Antriebsmotors (3) einen vorgegebenen Maximalwert überschreitet, wobei die Steuerung (6) weiter ein Speicherelement aufweist, in dem die Anzahl der gezählten Fahrzyklen des Verfahrmittels (5) oder die Anzahl der Ereignisse gespeichert werden können, in denen der Strom des Antriebsmotors (3) den vorgegebenen Maximalwert überschreitet.

2. Elektromechanischer Aktuator nach Anspruch 1, **dadurch gekennzeichnet, dass** die Antriebswelle des Antriebsmotors (3) ein Ringelement aufweist, wobei das Ringelement mindestens einen magnetisierten Abschnitt oder mindestens einen Magneten aufweist und wobei der Hall-Sensor in der Nähe des magnetisierten Abschnitts oder des Magneten angeordnet ist.

3. Elektromechanischer Aktuator nach Anspruch 1 oder 2, **dadurch gekennzeichnet, dass** die Steuerung (6) ausgebildet ist, die Anzahl der vom Hall-Sensor gelieferten Impulse zu zählen und bei einer Verfahrbewegung des Verfahrmittels (5) nach einer vorgegebenen Anzahl Impulsen seit Anlauf des Verfahrmittels (5) den Antriebsmotor (3) abzuschalten.

4. Elektromechanischer Aktuator nach einem der Ansprüche 1 bis 3, **dadurch gekennzeichnet, dass** das Umwandlungselement (4) als Spindel-Mutter-System ausgebildet ist.

5. Elektromechanischer Aktuator nach einem der Ansprüche 1 bis 4, **dadurch gekennzeichnet, dass** das Gehäuse (2) eine Grundplatte (8) und eine Deckplatte (9) umfasst, die über ein säulenartiges Verbindungselement (10) verbunden sind.

6. Elektromechanischer Aktuator nach Anspruch 5, **dadurch gekennzeichnet, dass** das säulenartige Verbindungselement (10) ein Gehäuse des Umwandlungselements (4) ist.

## Claims

1. Electromechanical actuator (1), comprising a housing (2), a drive motor (3) disposed in or on the housing, and a conversion element (4) driven by the drive motor (3), wherein the conversion element (4) includes a movable traveling means (5) that can be moved in a translational travel direction (T), wherein range limiting means (6, 7) are disposed in the actuator (1),
**characterized in that**
the range limiting means (6, 7) turn off the drive motor (3) when the traveling means has reached a predetermined maximal range of travel, wherein the range limiting means (6, 7) are configured as contact-less, electronic switch means and wherein the range limiting means (6, 7) comprise at least one Hall sensor that is in communication with a controller (6), wherein the controller (6) is configured to count the number of drive cycles of the traveling means (5) or to count the number of events, in which the current of the drive motor (3) exceeds a predetermined maximal value, wherein the controller (6) has a memory element, in which the number of the counted drive cycles of the traveling means (5) or the number of events can be stored, in which the current of the drive motor (3) exceeds the predetermined maximal value.

2. Electromechanical actuator according to claim 1,
**characterized in that**
the drive shaft of the drive motor (3) includes an annular element, wherein the annular element includes at least one magnetized segment or at least one magnet, and wherein the Hall sensor is disposed in proximity to the magnetized segment or the magnet.

3. Electromechanical actuator according to claim 1 or 2,
**characterized in that**
the controller (6) is configured to count the number of impulses output by the Hall sensor, and to turn off the drive motor (3) during a traveling movement of the traveling means (5) after a predetermined number of impulses since the start-up of the traveling means (5).

4. Electromechanical actuator according to one of claims 1 to 3,
**characterized in that**
the conversion element (4) is configured as a spindle-nut-system.

5. Electromechanical actuator according to one of claims 1 to 4,
**characterized in that**
the housing (2) comprises a base plate (8) and a cover plate (9) that are connected via a column-shaped connecting element (10).

6. Electromechanical actuator according to claim 5,
**characterized in that**
the column-shaped connecting element (10) is a housing of the conversion element (4).

## Revendications

1. Actionneur électromécanique (1) comprenant un boîtier (2), un moteur d'entraînement (3) disposé dans ou sur le boîtier et un élément de conversion (4) entraîné par le moteur d'entraînement (3), l'élément de conversion (4) étant un moyen de déplacement mobile (5) qui peut être déplacé dans une direction de translation (T), des moyens de limitation de course (6, 7) étant disposés dans l'actionneur (1),
**caractérisé en ce que**
les moyens de limitation de course (6, 7) coupent le moteur d'entraînement (3) lorsque le moyen de déplacement (5) a atteint une course maximale spécifiée, les moyens de limitation de course (6, 7) étant conçus comme des moyens de commutation électroniques sans contact et les moyens de limitation de course (6, 7) comprenant au moins un capteur à effet Hall qui est relié à une commande (6), la commande (6) étant conçue pour compter le nombre de cycles de translation du moyen de déplacement (5) ou pour compter le nombre d'événements au cours desquels le courant du moteur d'entraînement (3) dépasse une valeur maximale spécifiée, la commande (6) comportant en outre un élément mémoire dans lequel le nombre de cycles de translation comptés du moyen de déplacement (5) ou le nombre d'événements au cours desquels le courant du moteur d'entraînement (3) dépasse la valeur maximale spécifiée peuvent être enregistrés.

2. Actionneur électromécanique selon la revendication 1, **caractérisé en ce que** l'arbre d'entraînement du moteur d'entraînement (3) comporte un élément annulaire, l'élément annulaire comportant au moins une portion aimantée ou au moins un aimant et le capteur à effet Hall étant disposé à proximité de la portion aimantée ou de l'aimant.

3. Actionneur électromécanique selon la revendication 1 ou 2, **caractérisé en ce que** la commande (6) est conçue pour compter le nombre d'impulsions fournies par le capteur à effet Hall et arrêter le moteur d'entraînement (3) lors d'un déplacement du moyen de déplacement (5) après un nombre d'impulsions spécifié depuis le démarrage du moyen de déplacement (5).

4. Actionneur électromécanique selon l'une des revendications 1 à 3, **caractérisé en ce que** l'élément de conversion (4) est réalisé sous la forme d'un système broche-écrou.

5. Actionneur électromécanique selon l'une des revendications 1 à 4, **caractérisé en ce que** le boîtier (2) comprend une plaque de base (8) et une plaque de recouvrement (9) qui sont reliées par le biais d'un élément de liaison (10) de type colonne.

6. Actionneur électromécanique selon la revendication 5, **caractérisé en ce que** l'élément de liaison (10) de type colonne est un boîtier de l'élément de conversion (4) .
